# EUROPEAN PATENT APPLICATION

(11) **EP 2 399 491 A1**
(43) Date of publication of application: **28.12.2011**
(21) Application number: 10743345.0
(22) Date of filing: 12.02.2010
(51) Int. Cl.: A47J 17/02

(54) **ARRANGEMENT INSERTED INTO A COMPACTING ASSEMBLY USED IN A MANUAL GARLIC PRESS**

(30) Priority: 18.02.2009 BR MU8900170 U
(71) Applicant: Troccoli, Edson, Santana de Parnaiba - SP (BR)
(72) Inventor: Troccoli, Edson, Santana de Parnaiba - SP (BR)
(74) Representative: Robba, Pierpaolo
(86) International application number: PCT/BR2010/000025
(87) International publication number: WO 2010/094095

(57) **Abstract**

Arrangement inserted into a compacting assembly applied in a manual garlic masher, more specifically a garlic masher (EA) equipped with a compacting assembly (1) that allows for the total pressure of bulbs of garlic contained inside the receptacle (3) by means of pressure through a plate (4) having trapezoid protuberances (5) towards the holes (6) existing on the base (3a) of the receptacle (3); the perfect fit of the said protuberances (5) in the holes (6), as well as the sectional format of each one of these elements allows for the total crushing and mashing of bulbs of garlic, and subsequently the total elimination of the garlic mass, thus making use of the full relevant spice.

## Description

### TECHNICAL SCOPE.

This device model deals with a new arrangement inserted into a compacting device applied in a manual garlic masher. It is especially a compacting set that allows the full pressuring of bulb of garlic against the base of the manual masher receptacle, allowing for the mashing and crushing of bulbs of garlic, and as such the total elimination of the garlic mass, making a full use of the relevant spice. This compacting device is conformed by multiple "male" protuberances of sections preferentially in "Y" shape that fit perfectly in multiple holes in peripheral formats identical to the protuberances. These holes are located at the flat base of the manual garlic masher, allowing for all crushed garlic to be eliminated outwards by means of pressure between the parts.

### GROUNDS OF TECHNIQUE.

There are several models of manual garlic mashers on the market, and the simplest of them is the garlic mortar, which generally has a deep and conical cavity and a cylindrical club (pestle) having one of the ends with an arched deformity. Thus, the user inserts some bulbs of garlic in the mortar and crushes them through pressure applied against the bottom of the cavity by pressing the arched end of the pestle, thus causing the crushing of bulbs of garlic and obtaining the garlic paste.

However, such garlic mortar has some inconveniences. For example, for the development of the garlic paste the user should apply a strong pressure against the bulbs of garlic, making its use sometimes impracticable by some users (like the elder or people with special needs).

Another inconvenience is the fact that the referred garlic mortar needs to be clean in the recipient and the pestle, which takes more time from the user.

Another conventional model on the market is a metal, aluminum or stainless steel-based garlic masher, formed by a pair of stems that can be articulated, juxtaposed and connected by a crossing axle; the lower stem has a free end conformed by a recipient, of which the flat base has multiple holes, while the upper stem has a forcer conformed by a orthogonal projection, with its free end with a plate of format identical to the format of the peripheral internal contour of the recipient, and the referred forcer is axially laid out towards the lower stem. Thus, when the upper stem is pressed against the lower stem, the plate of the forcer presses the bulbs of garlic against the flat internal base of the recipient, allowing the mashed garlic to trespass the holes of the recipient's base.

The inconvenience of the referred model lies on the fact that the plate of the forcer does not allow the bulbs to be totally crushed, frequently leaving residues of garlic inside the recipient's base after the pressure is applied, which means that the user should slice it with a knife or waste them by throwing them out.

Another inconvenience in the referred model lies on the fact that garlic residues are left inside this conventional model, and are hard to be removed for cleaning, which prevents a proper cleaning for subsequent use.

### BRIEF DESCRIPTION OF THE SUBJECT MATTER.

With the aim of providing improvements to the consuming market, the applicant has developed a new constructive arrangement introduced in a compacting device applied in the forcer of the manual garlic masher in general. More specifically, it is a garlic compacting system allowing for the full crushing and mashing of bulbs of garlic, as well as the association between the new format of the compacting device and the pressure exerted by the pestle and the base, eliminating the garlic mass in full.

The new compacting device is basically conformed by two conventional parts, being one activating stem equipped with articulated pressure forcer with a pressuring plate with a lower surface having multiple "male" protuberances of sections preferentially in "Y" shape and distributed evenly. The other supplementary part comprises a support stem parallel to the activating stem, of which the end has a receptacle of internal perimeter corresponding to the configuration of the pressuring plate of the activating stem, and also having means for articulation of the referred activating stem. The base of the referred receptacle is flat and with multiple "female"-type holes, of which the cavity has an internal peripheral format identical to the external perimeters of each "Y"-shaped protuberance of the lower surface of the pressuring plate. This "Y"-shaped supplementary format allows for the perfect coupling of protuberances into the holes, and further directs the crushed matter outside the receptacle.

Thus, when the upper stem is pressed against the support stem through manual force applied by the user, the forcer descends into the interior of the receptacle, making the multiple protuberances of the pressuring plates to crush the bulbs of garlic and eliminating the crushed paste through the referred "female" holes of the referred receptacle.

The major advantage of the new garlic masher is the fact that the coupling of the compacting device allows for the total elimination and crushing of bulbs of garlic, thus providing a full use of the spice.

Another advantage is that the full elimination of the crushed garlic though the new device makes easier to clean the manual garlic crusher for proper cleaning and subsequent use.

### DESCRIPTION OF DRA WINGS.

In order to make this description more complete and provide a better idea of the product's characteristics, and according to a preferential practical development, this description includes a set of drawings to represent in a simplified way:

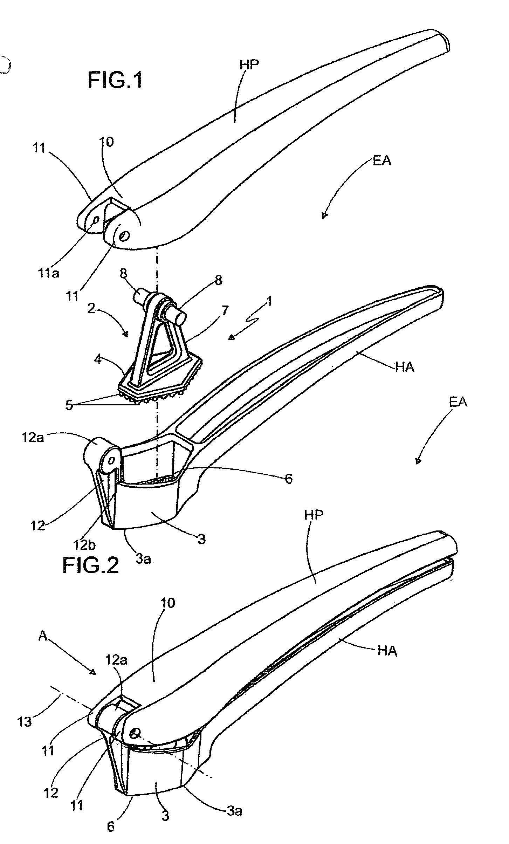

- Figure 1 shows an open perspective view of elements composing the innovation of the garlic masher;
- Figure 2 shows an assembled and closed perspective view of the masher;

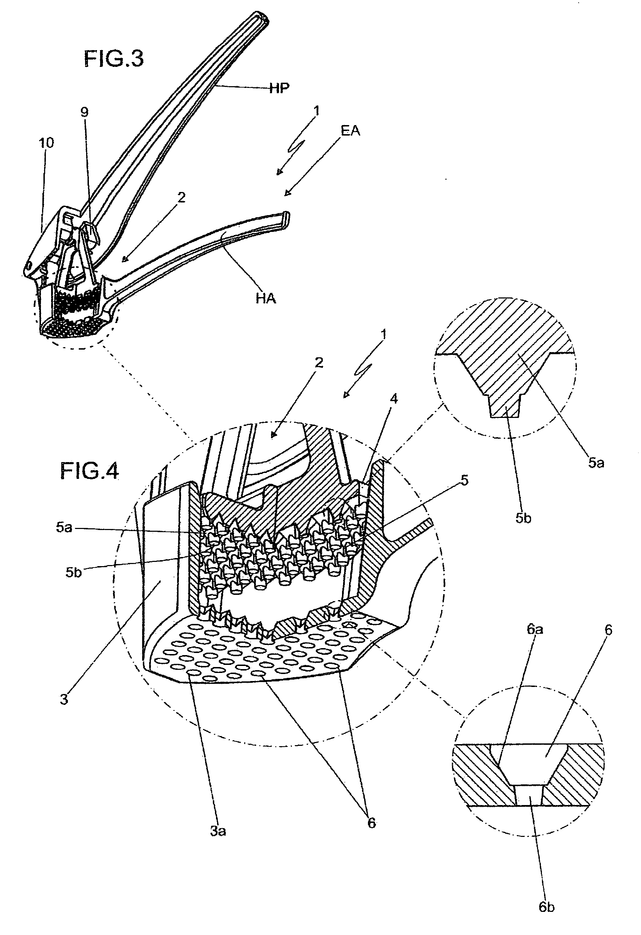

- Figure 3 and 4 illustrate a lower perspective view and its respective details.

### DETAILED DESCRIPTION OF THE SUBJECT MATTER.

Regarding the illustrated drawings, this model of Device refers to a new **"ARRANGEMENT INTRODUCED IN A COMPACTING DEVICE APPLIED IN A MANUAL GARLIC MASHER"**; more specifically, this is a garlic masher (EA) with a compacting system (1), having two basic parts, one of which is the pressure stem (HP) with an articulated forcer (2), and one support stem (HA) having a receptacle (3) that can receive and allow for the movements of the forcer (2); the said stems (HP) and (HA) are articulated in themselves (A), especially in the stretch related to the border of the receptacle (3), and when the referred stems are pressed against each other, there is the mashing and crushing of bulbs of garlic contained in the receptacle, thus resulting in a garlic paste.

The innovating compacting device (1) allows for the lower surface of the pressuring plate (4) of the forcer (2) to be filled with multiple and identical "male" protuberances (5), with a preferentially "Y"-shaped section, and each protuberance (5) has an inverted graded cone(5a), and from its thinner diameter, in a continuous radius, a short cylindrical projection (5b) is developed.

The receptacle (3) is configured with an internal perimeter of the same size of the external perimeter of the pressuring plate (4), and is closed from below by a flat base (3a) with multiple holes (6), distributed evenly and corresponding to the protuberances (5) of the forcer (2). Each of the said holes (6) has a "Y"-shaped section conforming a conical sector (6a), and from its thinner diameter a cylindrical part (6b) develops in continuous radius in order to receive, by fitting the sectors (5a) and (5b) the referred protuberances (5), thus resulting in the total coupling of male protuberances (5) in female holes (6), which allows for the full crushing of bulbs of garlic.

In a preferential configuration, the referred forcer (2) is conformed by a support (7) of preferentially trapezoid format, and in the free upper vertex are applied two cylindrical axles (8), with opposed diameters, which are fitted in corresponding internal cores (9) intended in the head stretch (10) of the pressure stem (HP). The said head (10) also provides for a reentrance that configures a part of parallel tabs (11) with thin holes (11a) that are a part of the articulation (A) between the parts of the garlic masher (EA). The support base (7) is integrated from the upper surface of the pressuring plate (4).

The receptacle (3) provides that from its border, in opposed diameter in comparison to the support stem (HA), there will be an elongated sector (12) with cylindrical end stretch (12a) trespassed by a thin hole (12b). The referred articulation is assembled by a small axle (13).

Thus, when the pressure stem (HP) and support stem (HA) are pressed against each other, the forcer (2) slides to the interior of the receptacle (3) until the protuberances (5) are perfectly coupled to the holes (6), resulting in the full crushing of bulbs of garlic inside the receptacle.

Although the preferred preparation of this device is described, any changes could be done within the scope of the model, fitting perfectly into the criteria defining it, meaning: the combination of elements already known in a new form or layout, resulting in improved operation or manufacture.

## Claims

1. **"ARRANGEMENT INTRODUCED IN A COMPACTING DEVICE APPLIED IN A MANUAL GARLIC MASHER",** more specifically, this is a garlic masher (EA) with a compacting system (1), having two basic parts, one of which is the pressure stem (HP) with an articulated forcer (2), and one support stem (HA) having a receptacle (3) that can receive and allow for the movements of the forcer (2); the said stems (HP) and (HA) are articulated in themselves (A), especially in the stretch related to the border of the receptacle (3), and when the referred stems are pressed against each other, there is the mashing and crushing of bulbs of garlic contained in the receptacle, thus resulting in a garlic paste; this is ***characterized* by** the innovating compacting device (1) that allows for the lower surface of the pressuring plate (4) of the forcer (2) to be filled with multiple and identical "male" protuberances (5), with a preferentially "Y"-shaped section, distributed evenly, and each protuberance (5) has an inverted graded cone(5a), and from its thinner diameter, in a continuous radius, a short cylindrical projection (5b) is developed. The receptacle (3) is configured with an internal perimeter of the same size of the external perimeter of the pressuring plate (4), and is closed from below by a flat base (3a) with multiple holes (6), distributed evenly and corresponding to the protuberances (5) of the forcer (2). Each of the said holes (6) has a "Y"-shaped section conforming a conical sector (6a), and from its thinner diameter a cylindrical part (6b) develops in continuous radius in order to receive, by fitting the sectors (5a) and (5b) the referred protuberances (5).

2. **"ARRANGEMENT INTRODUCED IN A COMPACTING DEVICE APPLIED IN A MANUAL GARLIC MASHER",** according to claim 1 and in a preferential configuration, ***characterized* by** the forcer (2) having a support (7) of preferentially trapezoid format, and in the free upper vertex are applied two cylindrical axles (8), with opposed diameters, which are fitted in corresponding internal cores (9) intended in the head stretch (10) of the pressure stem (HP); the support base (7) is integrated to the upper surface of the pressure plate (4).
